# EUROPEAN PATENT SPECIFICATION

(11) **EP 0 396 416 B1**
(45) Date of publication and mention of the grant of the patent: **28.12.1994**
(21) Application number: 90304833.8
(22) Date of filing: 03.05.1990
(51) Int. Cl.: A23L 1/317, A23L 1/325

(54) **Food product and method of manufacturing a food product**
Nahrungsmittel und Verfahren zur Herstellung eines Nahrungsmittels
Produit alimentaire et procédé de préparation d'un produit alimentaire

(30) Priority: 03.05.1989 GB 8910064
(43) Date of publication of application: 07.11.1990
(60) Divisional application: 94109565.5
(73) Proprietor: SUN VALLEY POULTRY LIMITED, Hereford, Worchestershire HR4 9PB (GB)
(72) Inventor: Clarke, Edward Thomas, Herefordshire, HR1 3BT (GB); Jull, Harvey William, Herefordshire, HR1 3HT (GB)
(74) Representative: Lally, William

(56) References cited:
- EP-A- 0 193 392
- EP-A- 0 322 009
- FR-A- 2 213 022
- FR-A- 2 577 389
- GB-A- 2 129 668

## Description

This invention is concerned with improvements relating to food products, and to methods of manufacture of food products. The invention has been devised primarily in relation to the production of a meat-based product, and in particular to a product based on the muscle meat of poultry. It is however to be appreciated that the invention may be utilised for meat in general terms, including fish, and particularly may be utilised in relation to synthetic meat products based on vegetable protein, such as soya.

Several suggestions have been made to provide a food product comprising layers of meat or fish, with a filling sandwiched therebetween, in the form of a terrine, as is disclosed in FR-A-2577389, FR-A-2213022, EP-A-0322009, EP-A-0193392, and GB-A-2129668.

According to this invention there is provided a food product comprising a base of meat, a cover of meat, the base and the cover having been crimped together along a peripheral line with portions of the base and cover within the peripheral line being spaced apart to provide a cavity in which a filling of the food product is located, the product having been subjected to a superficial cooking operation.

By the performance of the superficial cooking operation, the product is provided with a superficial enclosed texture, without incurring the disadvantages of providing the product fully cooked.

Preferably the product is cooked to a depth of no more than 5 mm, preferably less than 2 mm, and advantageously utilises an operation which does not involve adding fat to the product.

Advantageously the cover is provided with an embellishment of pastry, conveniently in the form of an open-work lattice of pastry strips.

The superficial cooking operation not only adheres the cover to the base, but also partially cooks the embellishment, and causes the embellishment to adhere to the cover.

According to this invention there is also provided a method of manufacturing a food product involving the steps:
[a] providing two meat patties [6, 8];
[b] treating the patties to bring myacin to the surface;
[c] sandwiching between the patties a filling [10];
[d] crimping the patties [6, 8] together around their edge regions to secure the two patties together along a peripheral line with portions of the base and cover within the peripheral line being spaced apart to provide a cavity [7] in which the filling is located; and
[e] subjecting the patties to a superficial cooking operation.

Preferably the method also comprises the step of chilling [but preferably not freezing] the product, and packaging the product.

Preferably the step [e] is carried out in the absence of additional fat, and advantageously involves subjecting the product to hot, preferably saturated air, preferably at a temperature of between 50°C and 80°C for a period of between 2 and 5 minutes.

Advantageously the method involves the provision of an embellishment of pastry to the cover prior to the step [e].

There will now be given a detailed description, to be read with reference to the accompanying drawings,of a food product, and a method of manufacture of the food product which have been selected for the purposes of illustrating the invention by way of example.

In the accompanying drawings:

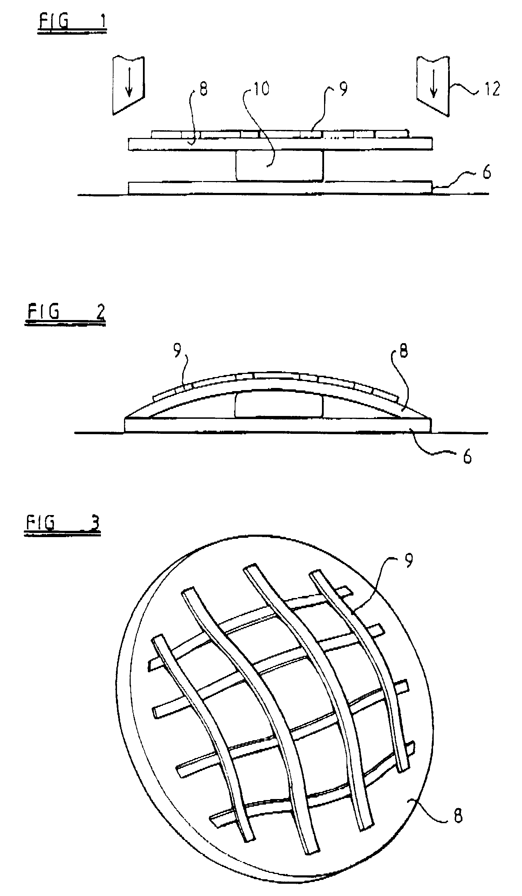

FIGURE 1 is a schematic side elevational view showing the product during the course of its manufacture;
FIGURE 2 is a schematic vertical sectional view through the product; and
FIGURE 3 is a perspective view of the product.

The food product which is the preferred embodiment of this invention is a meat pattie comprising a filling in the form of a sauce for the meat which will be released when the pattie has been cooked.

The product comprises a base 6 and a cover 8, generally flat, and conveniently of circular-type shape [including ovoid] of meat muscle, having been subjected to a tumbling operation in brine to bring myacin of the meat to the surface. The base 6 is placed on a flat surface, and a billet or slug 10 of a filling material is placed generally centrally on the base, the billet 10 being conveniently frozen and of shape-retaining form whilst retained cold. The filling may be of any convenient material, but it is particularly envisaged that the billet may be of a material which, when the product is cooked, is released to form a sauce for the meat, and may conveniently afford a cheese sauce.

The cover 8 is provided with a decorative embellishment conveniently in the form of a lattice 9 of puff pastry.

The cover 8 is then crimped to the base 6 along a peripheral line, conveniently by a crimping tool 12 which is designed to exert radial inward pressure on the cover 8, to avoid the formation of a thick outer flange. The product is thus produced into a dome-shape, with portions of the base and cover within the peripheral line being spaced apart to provide a cavity in which the filling is located.

The myacin which has been brought to the surface of the patties by the tumbling operation is effective to adhere the base and cover together, and the product is then fed through a heating oven at which it is subjected to heated and humidified air sufficient to cook the product superficially only. e.g. to a depth of less than 5 mm, preferably less than 2 mm. In this manner, the superficial protein of the product is "set" both to retain the base and cover secured together, and to present an "enclosed" texture to the product, this being accomplished without any significant rise in temperature to the filling 10 as would cause the filling to melt.

For example, the product may be subjected to the superficial cooking operation in the absence of additional fat by subjecting the product to heating by super-saturated air at a temperature of between 80°C and 90°C [wet bulb] and 90°C and 110°C [dry bulb].

In addition to providing the superficial cooking of the meat, the cooking also partly cooks the lattice pastry work 9 provided on the cover, causing the pastry work to "puff-up", and to adhere to the cover 8, to provide a product having considerable visual attraction.

The product may be chilled, and packaged for sale.

## Claims

1. A food product comprising a base [6] of meat, a cover [8] of meat, the base and the cover having been crimped together along a peripheral line with portions of the base and cover within the peripheral line being spaced apart to provide a cavity (7) in which a filling of the food product is located, the product having been subjected to a superficial cooking operation.

2. A food product according to Claim 1 wherein the superficial cooking operation involves cooking the product to a depth of no more than 5 mm.

3. A food product according to one of Claims 1 and 2 wherein the cooking operation does not involve adding fat to the product.

4. A food product according to any one of the preceding claims wherein the cover is provided with an embellishment [9] of pastry.

5. A food product according to Claim 4 wherein the embellishment a is an open-work lattice of pastry strips.

6. A method of manufacture of a food product involving the steps:
[a] providing two meat patties [6, 8];
[b] treating the patties to bring myacin to the surface;
[c] sandwiching between the patties a filling [10];
[d] crimping the patties [6, 8] together around their edge regions to secure the two patties together along a peripheral line with portions of the base and cover within the peripheral line being spaced apart to provide a cavity [7] in which the filling is located; and
[e] subjecting the patties to a superficial cooking operation.

7. A method according to Claim 6 wherein the method also comprises the steps [f] chilling [but preferably not freezing] the product, and [g] packaging the product.

8. A method according to one of Claims 6 and 7 wherein the step [e] is carried out in the absence of additional fat.

9. A method according to Claim 8 wherein the step [e] involves subjecting the product to hot, preferably saturated air, preferably at a temperature of between 50°C and 80°C for a period of between 2 and 5 minutes.

10. A method according to any one of Claims 6 to 9 wherein an embellishment [9] of pastry is applied to the cover [8] prior to step [e].

## Patentansprüche

1. Nahrungsmittel, das eine Unterlage (6) und eine Abdeckung (8) aus Fleisch umfaßt, wobei die Unterlage und die Abdeckung zusammen entlang einer Begrenzungslinie umgebogen wurden, wobei Abschnitte der Unterlage und der Abdeckung innerhalb der Begrenzungslinie voneinander beabstandet sind, um einen Hohlraum (7) zu liefern, in dem sich eine Füllung des Nahrungsmittels befindet, und das Nahrungsmittel einem oberflächlichen Kochen unterzogen wurde.

2. Nahrungsmittel nach Abspruch 1, dadurch gekennzeichnet, daß das oberflächliche Kochen das Kochen des Nahrungsmittels bis in eine Tiefe von nicht mehr als 5 mm einschließt.

3. Nahrungsmittel nach einem der Absprüche 1 und 2, dadurch gekennzeichnet, daß das Kochen nicht Hinzufügen von Fett zu dem Nahrungsmittel einschließt.

4. Nahrungsmittel nach einem der vorangehenden Ansprüche, dadurch gekennzeichnet, daß die Abdeckung mit einer Verzierung (9) aus Teig versehen ist.

5. Nahrungsmittel nach Anspruch 4, dadurch gekennzeichnet, daß die Verzierung ein durchbrochenes Gitter aus Teigstreifen ist.

6. Verfahren zur Herstellung eines Nahrungsmittels, das die Schritte einschließt:
(a) Bereitstellen von zwei Fleischpastetchen (6, 8);
(b) Behandeln der pastetchen, um Myacin an die Oberfläche zu bringen;
(c) Einschieben einer Füllung (10) zwischen die Pastetchen;
(d) Gemeinsames Umbiegen der Pastetchen (6, 8) entlang ihrer Kantenbereiche, um die zwei Pastetchen entlang einer Begrenzungslinie zu sichern, wobei Abschnitte der Unterlage und der Abdeckung innerhalb der Begrenzungslinie voneinander beabstandet sind, um einen Hohlraum (7) zu liefern, in dem sich die Füllung befindet; und
(e) Oberflächliches Kochen der Pastetchen.

7. Verfahren nach Anspruch 6, dadurch gekennzeichnet, daß das Verfahren auch die Schritte (f) des Abkühlens (aber vorzugsweise nicht Einfrierens) des Nahrungsmittels, und (g) des Verpackens des Nahrungsmittels umfaßt.

8. Verfahren nach einem der Ansprüche 6 und 7, dadurch gekennzeichnet, daß der Schritt (e) ohne zusätzliches Fett ausgeführt wird.

9. Verfahren nach Anspruch 8, dadurch gekennzeichnet, daß der Schritt (e) das Unterziehen des Nahrungsmittels mit heißer, vorzugsweise gesättigter Luft, vorzugsweise bei einer Temperatur von zwischen 50 und 80°C für eine Dauer von zwischen 2 und 5 Minuten einschließt.

10. Verfahren nach einem der Ansprüche 6 bis 9, dadurch gekennzeichnet, daß eine Verzierung (9) der Abdeckung (8) mit Teig vor Schritt (e) vorgenommen wird.

## Revendications

1. Produit alimentaire comprenant une partie inférieure [6] de viande, une partie supérieure [8] de viande, la partie inférieure et la partie supérieure ayant été pressées ensemble le long d'une ligne périphérique, les portions de la partie inférieure et de la partie supérieure entre la ligne périphérique étant écartées pour proposer une cavité [7] dans laquelle se trouve une garniture de produit alimentaire, le produit ayant été soumis à une opération de cuisson superficielle.

2. Produit alimentaire selon la revendication 1, pour lequel l'opération de cuisson superficielle comprend la cuisson du produit jusqu'à une profondeur inférieure à 5 mm.

3. Produit alimentaire selon l'une des revendications 1 et 2, pour lequel l'opération de cuisson ne comprend pas une addition de matière grasse au produit.

4. Produit alimentaire selon l'une quelconque des revendications précédentes, pour lequel la partie supérieure est dotée d'un ornement [9] de pâte.

5. Produit alimentaire selon la revendication 4, pour lequel l'ornement est un entrecroisement ajouré de bandes de pâte.

6. Procédé de production d'un produit alimentaire comprenant les étapes consistant à :
[a] apporter deux petits pâtés de viande [6, 8];
[b] traiter les petits pâtés pour apporter de la myacine à la surface;
[c] intercaler une garniture [10] entre les petits pâtés;
[d] presser ensemble les petits pâtés [6, 8] autour de leurs zones de bordure pour fixer ensemble les deux petits pâtés le long d'une ligne périphérique, les portions de la partie inférieure et de la partie supérieure entre la ligne périphérique étant écartées pour proposer une cavité [7] dans laquelle se trouve la garniture ; et
[e] soumettre les petits pâtés à une opération de cuisson superficielle.

7. Procédé selon la revendication 6, dans lequel le procédé comprend également les étapes consistant à [f] réfrigérer (mais de préférence sans congeler) le produit et [g] à conditionner le produit.

8. Procédé selon l'une des revendications 6 et 7, dans lequel on met en oeuvre l'étape [e] sans matière grasse supplémentaire.

9. Procédé selon la revendication 8, dans lequel l'étape [e] comprend le fait qu'on soumet le produit à de l'air chaud, de préférence saturé, de préférence à une température comprise entre 50°C et 80°C pendant une durée allant de 2 à 5 minutes.

10. Procédé selon l'une quelconque des revendications 6 à 9, dans lequel on applique un ornement [9] de pâte à la partie supérieure [8] avant l'étape [e].
